# EUROPEAN PATENT APPLICATION

(11) **EP 3 975 295 A1**
(43) Date of publication of application: **30.03.2022**
(21) Application number: 20914734.7
(22) Date of filing: 30.11.2020
(51) Int. Cl.: H01M 4/525

(54) **COBALT-FREE POSITIVE ELECTRODE MATERIAL OF LITHIUM ION BATTERY, PREPARATION METHOD THEREFOR, AND LITHIUM ION BATTERY**

(30) Priority: 17.01.2020 CN 202010054679
(71) Applicant: SVOLT ENERGY TECHNOLOGY CO., LTD, Changzhou, Jiangsu 213200 (CN)
(72) Inventor: QIAO, Qiqi, hangzhou, Jiangsu 213200 (CN); JIANG, Weijun, hangzhou, Jiangsu 213200 (CN); XU, Xinpei, hangzhou, Jiangsu 213200 (CN); SHI, Zetao, hangzhou, Jiangsu 213200 (CN); MA, Jiali, hangzhou, Jiangsu 213200 (CN); CHEN, Sixian, hangzhou, Jiangsu 213200 (CN)
(74) Representative: Novagraaf Technologies
(86) International application number: PCT/CN2020/132909
(87) International publication number: WO 2021/143376

(57) **Abstract**

The present disclosure provides a cobalt-free cathode material of a lithium ion battery, a method for preparing the cobalt-free cathode material, and the lithium ion battery. A general formula of the cobalt-free cathode material is LiₓNiₐMn_{b}R_{c}O₂, wherein, 1≤x≤1.15, 0.5≤a≤ 0.95, 0.02≤b≤0.48, 0<c≤0.05, and R is aluminum or tungsten. Therefore, as the cobalt-free cathode material is free of metal cobalt, the cost of the cathode material can be lowered effectively. Aluminum or tungsten in the cobalt-free cathode material can stabilize a crystal structure of the cathode material better, such that the lithium ion battery has excellent rate capability and cycle performance, and furthermore, good cycling stability of the lithium ion battery can be still maintained under a high-temperature and high-pressure testing condition.

## Description

### Technical Field

The disclosure belongs to the technical field of batteries, in particular to a cobalt-free lamellar cathode material for a lithium ion battery, a method for preparing the cobalt-free lamellar cathode material, and the lithium ion battery.

### Background

At present, a ternary cathode material widely used by the lithium ion battery includes three metal elements: Ni, Co and Mn. In the three metal elements, Co is the most expensive and is of most scarcity. Therefore, a conventional ternary cathode material is relatively expensive.

Thus, it is remained to further investigate the cathode material of the lithium ion battery.

### Summary

The present disclosure aims to at least solve one of the technical problems in the related art to a certain extent. Thus, it is thereof an objective of the present disclosure to provide a novel cobalt-free cathode material. The material has a relatively low preparation cost or excellent battery performance.

In one aspect of the present disclosure, the present disclosure provides a cobalt-free cathode material for a lithium ion battery. According to the embodiments of the present disclosure, a general formula of the cobalt-free cathode material is LiₓNiₐMn_{b}R_{c}O₂, wherein, 1 ≤x≤1.15, 0.5≤a≤0.95, 0.02≤b≤0.48, 0<c≤0.05, and R is aluminum or tungsten. Therefore, as the cobalt-free cathode material is free of metal cobalt, the cost of the cathode material can be lowered effectively. Aluminum or tungsten in the cobalt-free cathode material can stabilize a crystal structure of the cathode material better, such that the lithium ion battery has excellent rate capability and cycle performance, and furthermore, good cycling stability of the lithium ion battery can be still maintained under a high-temperature and high-pressure testing condition.

According to the embodiments of the present disclosure, when R is tungsten, 0.03≤b≤ 0.48, 0<c≤0.02; and when R is aluminum, 0.02≤b≤0.45, 1≤x≤1.10.

According to the embodiments of the present disclosure, the cobalt-free cathode material meets at least one of the following conditions: a crystal is of a lamellar structure; a hexagonal system; an R^{3̅}ₘ spatial point group; a morphology is monocrystal or polycrystal; and a grain size is 1-15 microns.

According to the embodiments of the present disclosure, an RXD spectrum of the cobalt-free cathode material, a peak ratio of 1(003) to I(104) is greater than or equal to 1.2.

According to the embodiments of the present disclosure, the cobalt-free cathode material meets at least one of the following conditions: a specific surface area is 0.15-1.5 m²/g; a pH value is less than or equal to 12; a content of residual alkali is 0.05-0.7wt%; a tap density is greater than or equal to 1.3 g/cm³; an apparent density is greater than or equal to 0.9 g/cm³; a water content is less than or equal to 1000ppm; and a content of a magnetic substance impurity is less than or equal to 300ppb.

In another aspect of the present disclosure, the present disclosure provides a method for preparing the cobalt-free cathode material. According to the embodiments of the present disclosure, the method for preparing the cobalt-free cathode material includes: mixing lithium hydroxide with a precursor NiₐMn_{b}R_{c}(OH)₂ uniformly to obtain a pre-mixture, wherein 0.5≤a ≤ 0.95, 0.02 ≤ b ≤ 0.48, 0<c ≤ 0.05, and R is aluminum or tungsten; and in the oxygen-containing atmosphere, enabling the pre-mixture to react at a predetermined temperature to obtain the cobalt-free cathode material. Therefore, as the cobalt-free cathode material prepared by the method is free of metal cobalt, the cost of the cathode material can be lowered effectively. Aluminum or tungsten in the cobalt-free cathode material can stabilize a crystal structure of the cathode material better, such that the lithium ion battery has excellent rate capability and cycle performance, and furthermore, good cycling stability of the lithium ion battery can be still maintained under a high-temperature and high-pressure testing condition.

According to the embodiments of the present disclosure, the predetermined temperature ranges from 700°C to 1000°C and the predetermined time ranges from 10 hours to 20 hours.

According to the embodiments of the present disclosure, the predetermined temperature is achieved by gradual heating, wherein a heating rate ranges from 1 °C /min to 5 °C /min.

According to the embodiments of the present disclosure, in the oxygen-containing atmosphere, a concentration of oxygen is greater than or equal to 90%.

In yet another aspect of the present disclosure, the present disclosure provides a lithium ion battery. According to the embodiments of the present disclosure, the lithium ion battery includes the cobalt-free cathode material. Therefore, the lithium ion battery is relatively low in cost and has excellent rate capability and cycle performance, and good cycling stability of the lithium ion battery can be still maintained under a high-temperature and high-pressure testing condition.

### Brief Description of the Drawings

The drawings of the description constituting a part of the disclosure are to provide further understanding of the present disclosure. The schematic embodiment and description thereof are used for explaining the present disclosure and do not limit the present disclosure improperly. In the drawings,
Fig. 1 is a scanning electron microscope picture of the cobalt-free cathode material LiNi_{0.92}Mn_{0.06}Al_{0.02}O₂ in the example 1;
Fig. 2 is an XRD spectrogram of the cobalt-free cathode material LiNi_{0.92}Mn_{0.06}Al_{0.02}O₂ in the example 1;
Fig. 3 is an EDS spectrogram of the cobalt-free cathode material LiNi_{0.92}Mn_{0.06}Al_{0.02}O₂ in the example 1;
Fig. 4 is a first time charge-discharge curve chart of the lithium ion battery in the example 1;
Fig. 5 is a cycle curve of the lithium ion battery in the example 1;
Fig. 6 is a scanning electron microscope picture of the cobalt-free cathode material LiNi_{0.92}Mn_{0.07}Al_{0.01}O₂ in the example 2;
Fig. 7 is an XRD spectrogram of the cobalt-free cathode material LiNi_{0.92}Mn_{0.07}Al_{0.01}O₂ in the example 2;
Fig. 8 is an EDS spectrogram of the cobalt-free cathode material LiNi_{0.92}Mn_{0.07}Al_{0.01}O₂ in the example 2;
Fig. 9 is a first time charge-discharge curve chart of the lithium ion battery in the example 2;
Fig. 10 is a cycle curve of the lithium ion battery in the example 2.

### Detailed Description of the Embodiments

Detail description on the embodiments of the present disclosure will be made below. The embodiments described below are exemplary, and are merely used for explaining the present disclosure and are not construed as limitation to the present disclosure. The embodiments without specific technologies or conditions indicated are carried out according to technologies or conditions described by literature in the field or description of a product. The used reagents or instruments not indicated by manufacturers are conventional products which can be purchased in the market.

In one aspect of the present disclosure, the present disclosure provides a cobalt-free cathode material for a lithium ion battery. According to the embodiments of the present disclosure, the general formula of the cobalt-free cathode material is LiₓNiₐMn_{b}R_{c}O₂, wherein 1 ≤x≤1.15 (for example, x is 1, 1.05, 1.08, 1.10, 1.12 and 1.15), 0.5≤a≤0.95 (for example a is 0.5, 0.6, 0.7, 0.8, 0.9 and 0.95), 0.02≤b≤0.48 (for example, b is 0.02, 0.03, 0.05, 0.1, 0.15, 0.2, 0.25, 0.3, 0.35, 0.4 and 0.48), 0<c≤0.05 (for example, c is 0.01, 0.02, 0.03, 0.04 and 0.05), and R is aluminum or tungsten. Therefore, as the cobalt-free cathode material is free of metal cobalt, the cost of the cathode material can be lowered effectively. Aluminum or tungsten in the cobalt-free cathode material can stabilize a crystal structure of the cathode material better, such that the lithium ion battery has excellent rate capability and cycle performance, and furthermore, good cycling stability of the lithium ion battery can be still maintained under a high-temperature and high-pressure testing condition.

According to the embodiments of the present disclosure, when R is tungsten, 0.03≤b≤ 0.48, 0<c≤0.02; and when R is aluminum, 0.02≤b≤0.45, 1≤x≤1.10. Therefore, during preparation, it is convenient to prepare LiₓNiₐMn_{b}W_{c}O₂ and LiₓNiₐMn_{b}Al_{c}O₂.

According to the embodiments of the present disclosure, the cobalt-free cathode material meets at least one of the following conditions: a crystal is of a lamellar structure; a hexagonal system; an R^{3̅}m spatial point group; a morphology is monocrystal or polycrystal; and a grain size is 1-15 microns (for example, 1 micron, 2 microns, 3 microns, 5 microns, 7 microns, 9 microns, 10 microns, 11 microns, 13 microns or 15 microns). Therefore, the crystal form and the crystal structure can enable the cobalt-free cathode material to have good electric property, such that the lithium ion battery has excellent battery performance such as cycle performance, charge and discharge performance and capacity retention ratio; the grain size not only can enable the cobalt-free cathode material to have excellent activity and specific capacity, but also can enable the cobalt-free cathode material to be relatively small in specific surface area, such that a condition that an electrolyte is in contact with the cobalt-free cathode material to generate side reactions can be further prevented; if the grain size is greater than 15 microns, the dimension of the primary particle of the cobalt-free cathode material is oversized, such that the specific capacity and the rate capability of the cobalt-free cathode material can be reduced relatively; if the grain size is smaller than 1 micron, the specific surface area of the cobalt-free cathode material is relatively large, such that the probability that the electrolyte has side reactions will be increased. It should be noted that the particle size is an average particle size.

According to the embodiments of the present disclosure, an RXD spectrum of the cobalt-free cathode material, a peak ratio of 1(003) to 1(104) is greater than or equal to 1.2 (for example, the peak ratio of 1(003) to 1(104) is 1.2, 1.3, 1.4, 1.5, 1.6, 1.7, 1.8, 1.9 and 2.0). Therefore, the mixed arrangement degree of lithium and nickel in the cobalt-free cathode material (the greater the peak value ratio is, the lower the mixed arrangement degree of lithium and nickel is), such that the excellent electric performance of the cobalt-free cathode material can be further ensured.

According to the embodiment of the present disclosure, the cobalt-free cathode material meets at least one of the following conditions:

The specific surface area is 0.15-1.5 m²/g (for example, 0.15 m²/g, 0.2 m²/g, 0.3 m²/g, 0.5 m²/g, 0.7 m²/g, 0.9 m²/g, 1.0 m²/g, 1.1 m²/g, 1.3 m²/g and 1.5 m²/g). Thus, the cobalt-free cathode material has good activity, and the probability that the cobalt-free cathode material is in contact with the electrolyte to generate side reactions is small; if the specific surface area is smaller than 0.15 m²/g, the activity of the cobalt-free cathode material is relatively small, such that the charge and discharge performance of the lithium ion battery are further affected; if the specific surface area of the cobalt-free cathode material is larger than 0.15 m²/g, the risk that the cobalt-free cathode material is reacted with the electrolyte is relatively large, such that the electric performance of the lithium ion battery is further affected.

The pH value is less than or equal to 12 (for example pH is 12, 11 and 10), and thus, the cobalt-free cathode material is excellent in structural stability.

The content of residual alkali is 0.05-0.7wt%, for example, 0.05wt%, 0.1wt%, 0.2wt%, 0.3wt%, 0.4wt%, 0.5wt%, 0.6wt% and 0.7wt%. Therefore, the content of the residual alkali (lithium hydroxide and lithium carbonate) of the cobalt-free cathode material is relatively low, such that good rate, specific capacity and cycle performance of the lithium ion are further ensured effectively.

The tap density is greater than or equal to 1.3 g/cm³, for example 1.3 g/cm³, 1.4 g/cm³, 1.5 g/cm³, 1.7 g/cm³, 1.9 g/cm³, 2.0 g/cm³, 2.3 g/cm³, 2.5 g/cm³ and 2.8 g/cm³, and the apparent density is greater than or equal to 0.9 g/cm³, for example, 0.9 g/cm³, 1.0 g/cm³, 1.1 g/cm³, 1.2 g/cm³, 1.4 g/cm³, 1.5 g/cm³, 1.7 g/cm³, 1.9 g/cm³, 2.0 g/cm³, 2.3 g/cm³ and 2.5 g/cm³. Therefore, the lithium ion battery has excellent specific capacity. If the tap density is less than 1.3 g/cm³ or the apparent density is less than 0.9 g/cm³, the compaction density is low when a battery cell is used, such that the energy density of the lithium ion battery is further relatively low.

The water content is less than or equal to 1000ppm, and thus, the electric performance of the cobalt-free cathode material can be further improved, such that the specific capacity, the rate and the cycle performance of the lithium ion battery are further improved.

The content of the magnetic substance impurity is less than or equal to 300ppb, and the electric performance of the cobalt-free cathode material will be affected in presence of the magnetic substance, such that the battery performance of the lithium ion battery is further affected. However, in the preparation process of the cobalt-free cathode material, it is hard to prevent the magnetic substance impurity from being introduced, and the content of the magnetic substance impurity of the cobalt-free cathode material of the application is lower than 300ppb, such that influence of the magnetic substance impurity on self-discharge of the lithium ion battery can be reduced as far as possible.

In another aspect of the present disclosure, the present disclosure provides a method for preparing the cobalt-free cathode material. According to the embodiments of the present disclosure, the method for preparing the cobalt-free cathode material includes:

S100: lithium hydroxide is mixed with a precursor NiₐMn_{b}R_{c}(OH)₂ uniformly to obtain a pre-mixture, wherein 0.5≤a≤0.95, 0.02≤b≤0.48, 0<c≤0.05, and R is aluminum or tungsten.

According to the embodiments of the present disclosure, there is no special requirements on the specific preparation method of the precursor NiₐMn_{b}R_{c}(OH)₂, and those skilled in the art can select the method flexibly according to an actual condition. In some embodiments, the specific preparation method of the precursor NiₐMn_{b}R_{c}(OH)₂ includes: NiSO₄·6H₂O, MnSO₄·H₂O and Al₂(SO₄)₃·6H₂O (or (NH₄)₁₀W₁₂O₄·10H₂O) are weighed at a stoichiometric ratio and are mixed to prepare a 2 mol/L metal salt solution, and prepare a 4 mol/L sodium hydroxide solution; the metal salt solution, the NaOH solution and ammonia water are added into a reaction kettle protected by an N₂ atmosphere, wherein a system temperature in the reaction kettle is 55°C, the pH is controlled at about 11.3 and a stirring rotating speed is 500 r/min; a precursor NiₐMn_{b}R_{c}(OH)₂ precipitate is generated; and the precursor NiₐMn_{b}R_{c}(OH)₂ precipitate is dried to obtain NiₐMn_{b}R_{c}(OH)₂.

Further, a mixing mass ratio of lithium hydroxide and the precursor LiₓNiₐMn_{b}R_{c}O₂ can be determined by those skilled in the art according to specific values of x, a, b and c in the needed LiₓNiₐMn_{b}R_{c}O₂, thereby obtaining the cobalt-free cathode material LiₓNiₐMn_{b}R_{c}O₂ with a molar ratio of lithium to nickel to manganese to R (aluminum or tungsten) is x: a: b: c.

According to the embodiments of the present disclosure, mixing of lithium hydroxide and the precursor NiₐMn_{b}R_{c}(OH)₂ is carried out in the high speed mixing apparatus, wherein the rotating speed of the mixing apparatus is 800-900 rpm, the mixing time is 5-20 minutes, and a material filling rate in the mixing apparatus is 40-80%. Therefore, lithium hydroxide and the precursor NiₐMn_{b}R_{c}(OH)₂ are mixed more uniformly to improve the reacting uniformity and sufficiency of lithium hydroxide and the precursor NiₐMn_{b}R_{c}(OH)₂.

S200: a reaction is conducted on the pre-mixture at a predetermined temperature in an oxygen-containing atmosphere to obtain the cobalt-free cathode material. In the reaction process, lithium hydroxide is melted and generates lithium oxide, the precursor is dehydrated to generate a metal oxide, in an oxygen-containing environment, the precursor and the metal oxide are melted integrally to obtain the single phase cobalt-free cathode material LiₓNiₐMn_{b}R_{c}O₂.

According to the embodiments of the present disclosure, the predetermined temperature ranges from 700°C to 1000°C (for example 700°C, 750°C, 800°C, 850°C, 900°C, 950°C and 1000°C) and the predetermined time ranges from 10 hours to 20 hours. Therefore, the cobalt-free cathode material LiₓNiₐMn_{b}R_{c}O₂ with needed crystal structure, crystal form and proper grain size can be obtained under the condition. If the temperature is lower than 700°C, the reaction is not full, such that the crystal of the cobalt-free cathode material does not grow intactly, thereby affecting the electric performance of the cobalt-free cathode material. If the temperature is higher than 1000°C, the crystal particle grows too large (the grain size is large), such that the specific capacity and the rate capability of the lithium ion battery are relatively reduced.

According to the embodiments of the present disclosure, the predetermined temperature is achieved by gradual heating, wherein a heating rate ranges from 1 °C /min to 5 °C /min, for example, 1 °C /min, 2 °C /min, 3 °C /min, 4 °C /min and 5 °C /min. Therefore, the heating rate is relatively slow and mild, such that a condition that the cobalt-free cathode material with needed crystal form and crystal structure is not obtained as a result of too high heating rate can be avoided.

According to the embodiments of the present disclosure, in the oxygen-containing atmosphere, a concentration of oxygen is greater than or equal to 90%, for example 90%, 92%, 94%, 95%, 98% and 100%. Therefore, generation of the cobalt-free cathode material can be ensured effectively, and conversion from unstable Ni³⁺ in the cobalt-free cathode material to stable Ni²⁺ is inhibited to ensure the stability of the cobalt-free cathode material.

According to the embodiments of the present disclosure, after the reaction in the S200 is finished, natural cooling is conducted, and then the cobalt-free cathode material can be further crushed and screened by a 300-400-mesh sieve to obtain the cobalt-free cathode material with a proper particle size.

According to the embodiments of the present disclosure, as the cobalt-free cathode material prepared by the method is free of metal cobalt, the cost of the cathode material can be lowered effectively. Aluminum or tungsten in the cobalt-free cathode material can stabilize a crystal structure of the cathode material better, such that the lithium ion battery has excellent rate capability and cycle performance, and furthermore, good cycling stability of the lithium ion battery can be still maintained under a high-temperature and high-pressure testing condition.

In yet another aspect of the present disclosure, the present disclosure provides a lithium ion battery. According to the embodiments of the present disclosure, the lithium ion battery includes the cobalt-free cathode material. Therefore, the lithium ion battery is relatively low in cost and has excellent rate capability and cycle performance, and good cycling stability of the lithium ion battery can be still maintained under a high-temperature and high-pressure testing condition.

According to the embodiments of the present disclosure, there is no special requirements on specific materials of an anode and an electrolyte in the lithium ion battery, and those skilled in the art can select the anode and the electrolyte of any one material in the prior art flexibly according to an actual condition.

### Examples

### Example 1

A method for preparing the cobalt-free cathode material LiNi_{0.92}Mn_{0.06}Al_{0.02}O₂ includes:
S1: the specific preparation method of the precursor Ni_{0.92}Mn_{0.06}Al_{0.02}(OH)₂ includes: NiSO₄·6H₂O, MnSO₄·H₂O and Al₂(SO₄)₃·6H₂O (a molar ratio of nickel to manganese and aluminum is 0.92: 0.06: 0.02) are weighed at a stoichiometric ratio and the sulfates are mixed to prepare a 2 mol/L metal salt solution, and prepare a 4 mol/L sodium hydroxide solution; the metal salt solution, the NaOH solution and ammonia water are added into a reaction kettle protected by an N₂ atmosphere, wherein a system temperature in the reaction kettle is 55 °C, the pH is controlled at about 11.3 and a stirring rotating speed is 500 r/min; a precursor Ni_{0.92}Mn_{0.06}Al_{0.02}(OH)₂ precipitate is generated; and the precursor Ni_{0.92}Mn_{0.06}Al_{0.02}(OH)₂ precipitate is dried to obtain Ni_{0.92}Mn_{0.06}Al_{0.02}(OH)₂.
S2: a step of mixing the precursor Ni_{0.92}Mn_{0.06}Al_{0.02}(OH)₂with LiOH: LiOH and Ni_{0.92}Mn_{0.06}Al_{0.02}(OH)₂ are weighed respectively at a stoichiometric ratio and are mixed uniformly in the high speed mixing apparatus to obtain a mixture, wherein a molar ratio of lithium to nickel to manganese and aluminum is 1: 0.92: 0.06: 0.02, wherein the rotating speed of the high speed mixing apparatus is 850 rpm, the mixing time is 10 minutes, and the material filling rate in the mixing apparatus is 55%; and
S3, a step of reaction of the cobalt-free cathode material LiNi_{0.92}Mn_{0.06}Al_{0.02}(OH)₂: the pre-mixture is placed in an oxygen atmosphere (an oxygen containing concentration is 95%); a high-temperature reaction is conducted for 10 hours at 750°C (a heating rate is 1-5 °C /min) to synthesize the cobalt-free cathode material LiNi_{0.92}Mn_{0.06}Al_{0.02}(OH)₂; then natural cooling is conducted and the cobalt-free cathode material is crushed and screened by a 400-mesh sieve to obtain the cobalt-free cathode material LiNi_{0.92}Mn_{0.06}Al_{0.02}O₂ with a proper particle size.

Test analysis:

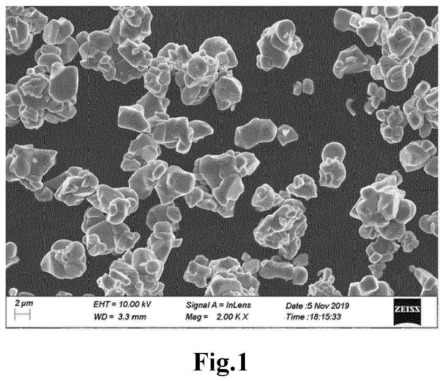

(1) Electron microscope scanning is conducted on the obtained cobalt-free cathode material LiNi_{0.92}Mn_{0.06}Al_{0.02}(OH)₂, the scanning electron microscope picture refers to the Fig. 1, and it can be known from the scanning electron microscope picture that the prepared cobalt-free cathode material is of monocrystal morphology and the average particle size of the particle is 3-4 microns.

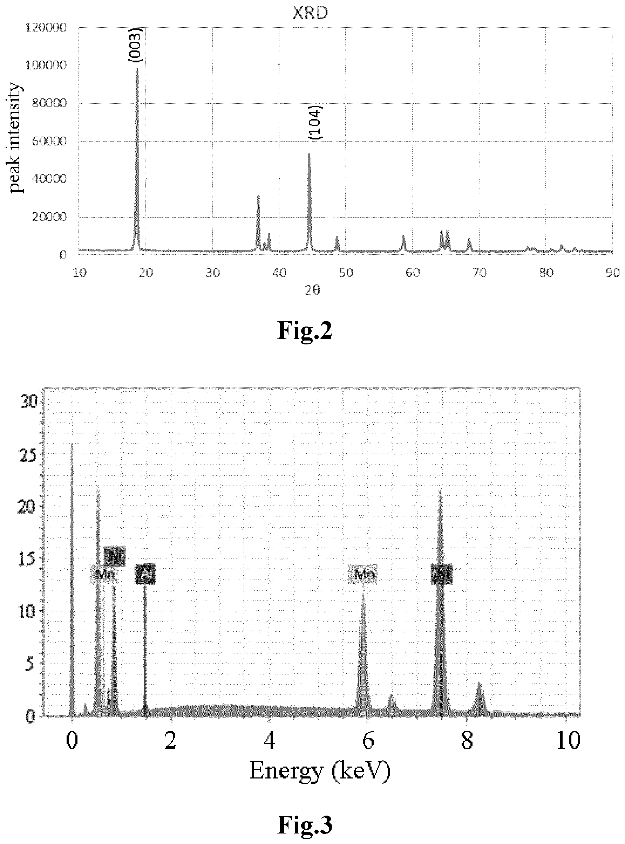

XRD test is conducted on the obtained cobalt-free cathode material LiNi_{0.92}Mn_{0.06}Al_{0.02}(OH)₂, a test spectrogram refers to the Fig. 2, and it can be known from the Fig. 2 that the prepared cobalt-free cathode material is of a lamellar structure, hexagonal system, and has an R^{3̅}m spatial point group. The I(003)/I(104) ratio is 1.8. It can be known that the mixed arrangement degree of nickel and lithium in the cobalt-free cathode material is relatively low.

(3) EDS test is conducted on the obtained cobalt-free cathode material LiNi_{0.92}Mn_{0.06}Al_{0.02}(OH)₂, the test spectrogram refers to the Fig. 3, and it can be known from the Fig. 3 that the prepared cobalt-free cathode material has three metal elements: Ni, Mn and Al (through an ICP test, presence of lithium can be further determined).

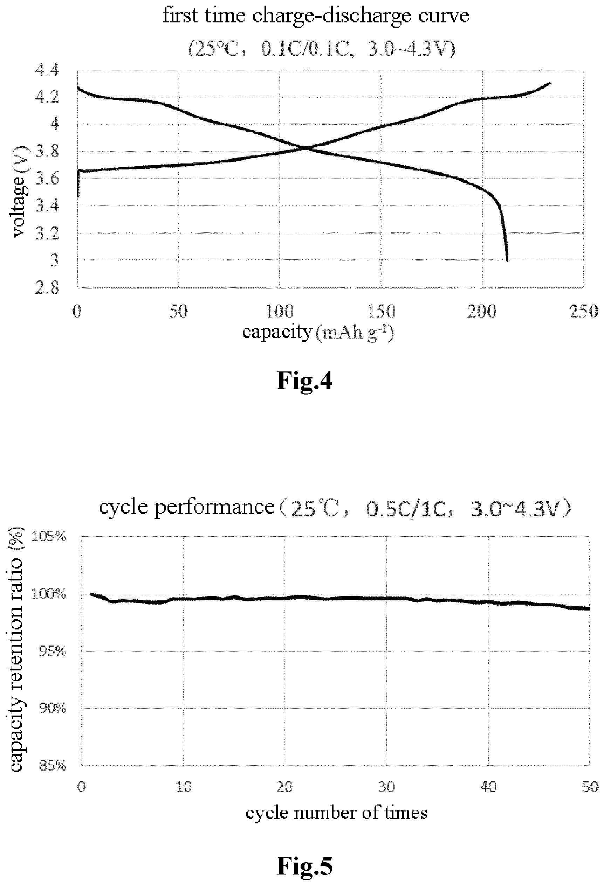

(4) The obtained cobalt-free cathode material, the anode (lithium piece), the electrolyte (the electrolyte includes LiPF6/lithium Hexafluorophosphate) EC (ethylene carbonate)-DMC (dimethyl carbonate) assemble the lithium ion battery, and charge and discharge performance of the lithium ion battery is tested, and a charge and discharge performance test (the voltage range is 3.0∼ 4.3V) result refers to the Fig. 4 (first time charge and discharge curve). It can be seen in combination with the Fig. 4 that at 0.1C discharge rate, the first time specific charge and discharge capacities of the lithium ion battery are 233.3 mAh/g and 212.2 mAh/g respectively, and the first time efficiency is 91%.

(5) the cycle performance of the lithium ion battery obtained in the (4) is tested at 25°C (the test voltage is 3.0-4.3 V), the cycle curve at 0.5C/1C refers to the Fig. 5, and it can be seen from the Fig. 5 that the capacity retention ratio of the lithium ion battery after 50 cycles is 98.7%. Reasons that the cycle performance of the cathode-free cathode material is excellent are as follows: more elements Mn and Al, which stabilizes the crystal structure of the cathode-free cathode material.

### Example 2

The cathode-free cathode material LiNi_{0.92}Mn_{0.06}Al_{0.02}O₂ is prepared by adopting method and steps same with those in the example 1, and the difference lies in that the high-temperature reaction temperature is 800°C.

By adopting conditions same with those in the example 1, the lithium ion battery is prepared by taking the prepared cobalt-free cathode material is taken as the cathode, and the first time charge and discharge performance and the cycle performances of the lithium ion battery are tested (the test conditions are as same as those in the example 1), and at 0.1C discharge rate, the first time specific charge and discharge capacities of the lithium ion battery are 230.8 mAh/g and 207.5 mAh/g respectively, and the first time efficiency is 89.9%; and the capacity retention ratio of the lithium ion battery after 50 cycles at 0.5C/1C is 97.2%.

### Example 3

The cathode-free cathode material LiNi_{0.92}Mn_{0.06}Al_{0.02}O₂ is prepared by adopting method and steps same with those in the example 1, and the difference lies in that the high-temperature reaction temperature is 850°C.

By adopting conditions same with those in the example 1, the lithium ion battery is prepared by taking the prepared cobalt-free cathode material is taken as the cathode, and the first time charge and discharge performance and the cycle performances of the lithium ion battery are tested (the test conditions are as same as those in the example 1), and at 0.1C discharge rate, the first time specific charge and discharge capacities of the lithium ion battery are 228.4 mAh/g and 203.5 mAh/g respectively, and the first time efficiency is 89.1%; and the capacity retention ratio of the lithium ion battery after 50 cycles at 0.5C/1C is 95.6%.

### Example 4

The cathode-free cathode material LiNi_{0.92}Mn_{0.06}Al_{0.02}O₂ is prepared by adopting method and steps same with those in the example 1, and the difference lies in that the high-temperature reaction temperature is 900°C.

By adopting conditions same with those in the example 1, the lithium ion battery is prepared by taking the prepared cobalt-free cathode material is taken as the cathode, and the first time charge and discharge performance and the cycle performances of the lithium ion battery are tested (the test conditions are as same as those in the example 1), and at 0.1C discharge rate, the first time specific charge and discharge capacities of the lithium ion battery are 215.9 mAh/g and 190.4 mAh/g respectively, and the first time efficiency is 88.2%; and the capacity retention ratio of the lithium ion battery after 50 cycles at 0.5C/1C is 93.8%.

### Example 5

The cathode-free cathode material LiNi_{0.92}Mn_{0.06}Al_{0.02}O₂ is prepared by adopting method and steps same with those in the example 1, and the difference lies in that the high-temperature reaction temperature is 1000 °C.

By adopting conditions same with those in the example 1, the lithium ion battery is prepared by taking the prepared cobalt-free cathode material is taken as the cathode, and the first time charge and discharge performance and the cycle performances of the lithium ion battery are tested (the test conditions are as same as those in the example 1), and at 0.1C discharge rate, the first time specific charge and discharge capacities of the lithium ion battery are 205.8 mAh/g and 180.1 mAh/g respectively, and the first time efficiency is 87.5%; and the capacity retention ratio of the lithium ion battery after 50 cycles at 0.5C/1C is 90.5%.

### Example 6

A method for preparing the cobalt-free cathode material LiNi_{0.50}Mn_{0.45}Al_{0.05}(OH)₂ includes:
S1: the specific preparation method of the precursor Ni_{0.50}Mn_{0.45}Al_{0.05}(OH)₂ includes: NiSO₄·6H₂O, MnSO₄·H₂O and Al₂(SO₄)₃·6H₂O (a molar ratio of nickel to manganese and aluminum is 0.50: 0.45: 0.05) are weighed at a stoichiometric ratio and the sulfates are mixed to prepare a 2 mol/L metal salt solution, and prepare a 4 mol/L sodium hydroxide solution; the metal salt solution, the NaOH solution and ammonia water are added into a reaction kettle protected by an N₂ atmosphere, wherein a system temperature in the reaction kettle is 55 °C, the pH is controlled at about 11.0 and a stirring rotating speed is 600 r/min; a precursor Ni_{0.50}Mn_{0.45}Al_{0.05}(OH)₂ precipitate is generated; and the precursor Ni_{0.50}Mn_{0.45}Al_{0.05}(OH)₂ precipitate is dried to obtain Ni_{0.50}Mn_{0.45}Al_{0.05}(OH)₂
S2: mixing is conducted by adopting the method same with that in the example 1, and the difference lies in that the precursor is Ni_{0.50}Mn_{0.45}Al_{0.05}(OH)₂
S3: the cathode-free cathode material LiNi_{0.50}Mn_{0.45}Al_{0.05}O₂ is prepared by adopting method and steps same with those in the example 1, and the difference lies in that the high-temperature reaction temperature is 1000 °C.

By adopting conditions same with those in the example 1, the lithium ion battery is prepared by taking the prepared cobalt-free cathode material is taken as the cathode, and the first time charge and discharge performance and the cycle performances of the lithium ion battery are tested (the test conditions are as same as those in the example 1), and at 0.1C discharge rate, the first time specific charge and discharge capacities of the lithium ion battery are 198.8 mAh/g and 171.0 mAh/g respectively, and the first time efficiency is 86.0%; and the capacity retention ratio of the lithium ion battery after 50 cycles at 0.5C/1C is 98.9%.

### Example 7

S1: the specific preparation method of the precursor Ni_{0.95}Mn_{0.02}Al_{0.03}(OH)₂ includes: NiSO₄·6H₂O, MnSO₄·H₂O and Al₂(SO₄)₃·6H₂O (a molar ratio of nickel to manganese and aluminum is 0.95: 0.02: 0.03) are weighed at a stoichiometric ratio and the sulfates are mixed to prepare a 2 mol/L metal salt solution, and prepare a 4 mol/L sodium hydroxide solution; the metal salt solution, the NaOH solution and ammonia water are added into a reaction kettle protected by an N₂ atmosphere, wherein a system temperature in the reaction kettle is 55 °C, the pH is controlled at about 11.5 and a stirring rotating speed is 400 r/min; a precursor Ni_{0.95}Mn_{0.02}Al_{0.03}(OH)₂ precipitate is generated; and the precursor Ni_{0.95}Mn_{0.02}Al_{0.03}(OH)₂ precipitate is dried to obtain Ni_{0.95}Mn_{0.02}Al_{0.03}(OH)₂.
S2: mixing is conducted by adopting the method same with that in the example 1, and the difference lies in that the precursor is Ni_{0.95}Mn_{0.02}Al_{0.03}(OH)₂
S3: the cathode-free cathode material LiNi_{0.95}Mn_{0.02}Al_{0.03}O₂ is prepared by adopting method and steps same with those in the example 1, and the difference lies in that the high-temperature reaction temperature is 720 °C.

By adopting conditions same with those in the example 1, the lithium ion battery is prepared by taking the prepared cobalt-free cathode material is taken as the cathode, and the first time charge and discharge performance and the cycle performances of the lithium ion battery are tested (the test conditions are as same as those in the example 1), and at 0.1C discharge rate, the first time specific charge and discharge capacities of the lithium ion battery are 235.2 mAh/g and 215.4 mAh/g respectively, and the first time efficiency is 91.6%; and the capacity retention ratio of the lithium ion battery after 50 cycles at 0.5C/1C is 97.6%.

### Example 8

S1; same with the example 1;
S2: a step of mixing the precursor Ni_{0.92}Mn_{0.06}Al_{0.02}(OH)₂with LiOH: LiOH and Ni_{0.92}Mn_{0.06}Al_{0.02}(OH)₂ are weighed respectively at a stoichiometric ratio and are mixed uniformly in the high speed mixing apparatus to obtain a mixture, wherein a molar ratio of lithium to nickel to manganese and aluminum is 1.2: 0.92: 0.06: 0.02, wherein the rotating speed of the high speed mixing apparatus is 850 rpm, the mixing time is 10 minutes, and the material filling rate in the mixing apparatus is 55%;
S3, a step of reaction of the cobalt-free cathode material Ni_{0.92}Mn_{0.06}Al_{0.02}O₂: the pre-mixture is placed in an oxygen atmosphere (an oxygen containing concentration is 95%); a high-temperature reaction is conducted for 10 hours at 760 °C (a heating rate is 1-5 °C /min) to synthesize the cobalt-free cathode material LiNi_{0.92}Mn_{0.06}Al_{0.02}O₂; then natural cooling is conducted and the cobalt-free cathode material is crushed and screened by a 400-mesh sieve to obtain the cobalt-free cathode material LiNi_{0.92}Mn_{0.06}Al_{0.02}O₂ with a proper particle size.

By adopting conditions same with those in the example 1, the lithium ion battery is prepared by taking the prepared cobalt-free cathode material is taken as the cathode, and the first time charge and discharge performance and the cycle performances of the lithium ion battery are tested (the test conditions are as same as those in the example 1), and at 0.1C discharge rate, the first time specific charge and discharge capacities of the lithium ion battery are 225.7 mAh/g and 201.3 mAh/g respectively, and the first time efficiency is 89.2%; and the capacity retention ratio of the lithium ion battery after 50 cycles at 0.5C/1C is 97.2%.

### Example 9

A method for preparing the cobalt-free cathode material LiNi_{0.92}Mn_{0.07}Al_{0.01}O₂ includes:
S1: a specific preparation method for the precursor Ni_{0.92}Mn_{0.07}W_{0.01}(OH)₂ includes: NiSO₄·6H₂O, MnSO₄·H₂O and (NH₄)₁₀W₁₂O₄·1-xH₂O are weighed at a stoichiometric ratio, wherein x is 10. A molar ratio of nickel to manganese to tungsten is 0.92: 0.07: 0.01. The salts are mixed to prepare a 2 mol/L metal salt solution, and prepare a 4 mol/L sodium hydroxide solution; the metal salt solution, the NaOH solution and ammonia water are added into a reaction kettle protected by an N₂ atmosphere, wherein a system temperature in the reaction kettle is 55 °C, the pH is controlled at about 11.3 and a stirring rotating speed is 500 r/min; a precursor Ni_{0.92}Mn_{0.07}Al_{0.01}(OH)₂ precipitate is generated; and the precursor Ni_{0.92}Mn_{0.07}Al_{0.01}(OH)₂ precipitate is dried to obtain Ni_{0.92}Mn_{0.07}Al_{0.02}(OH)₂;
S2: a step of mixing the precursorNi_{0.92}Mn_{0.07}W_{0.01}(OH)₂ with LiOH: LiOH and Ni_{0.92}Mn_{0.07}W_{0.01}(OH)₂ are weighed respectively at a stoichiometric ratio and are mixed uniformly in the high speed mixing apparatus to obtain a mixture, wherein a molar ratio of lithium to nickel to manganese and aluminum is 1: 0.92: 0.07: 0.01, wherein the rotating speed of the high speed mixing apparatus is 900 rpm, the mixing time is 10 minutes, and the material filling rate in the mixing apparatus is 60%; and
S3, a step of reaction of the cobalt-free cathode material Ni_{0.92}Mn_{0.07}W_{0.01}(OH)₂ the pre-mixture is placed in an oxygen atmosphere (an oxygen containing concentration is 95%); a high-temperature reaction is conducted for 12 hours at 740°C (a heating rate is 1-5°C/min) to synthesize the cobalt-free cathode material LiNi_{0.92}Mn_{0.07}W_{0.01}O₂; then natural cooling is conducted and the cobalt-free cathode material is crushed and screened by a 400-mesh sieve to obtain the cobalt-free cathode material LiNi_{0.92}Mn_{0.07}W_{0.01}O₂ with a proper particle size.

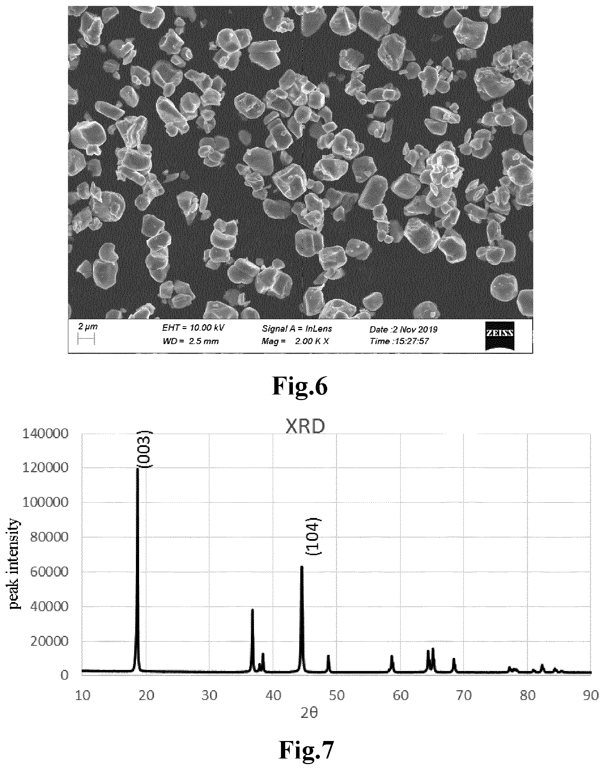

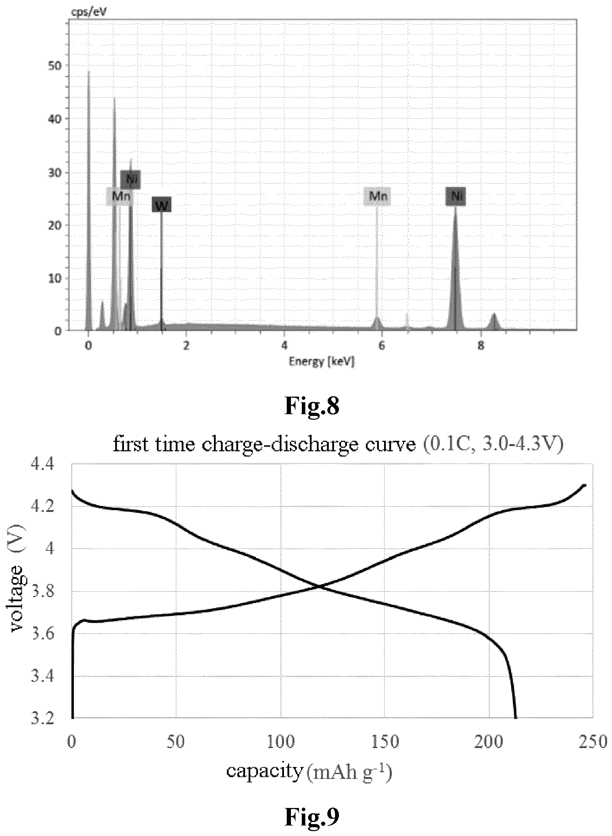

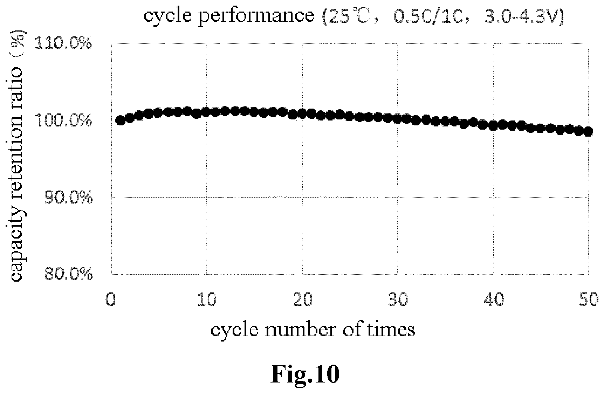

Test analysis:
(1) Electron microscope scanning is conducted on the obtained cobalt-free cathode material LiNi_{0.92}Mn_{0.07}W_{0.01}O₂, the scanning electron microscope picture refers to the Fig. 6, and it can be known from the scanning electron microscope picture that the prepared cobalt-free cathode material is of monocrystal morphology and the average particle size of the particle is 2-4 microns.
(2) XRD test is conducted on the obtained cobalt-free cathode material LiNi_{0.92}Mn_{0.07}W_{0.01}O₂, a test spectrogram refers to the Fig. 7, and it can be known from the Fig. 7 that the prepared cobalt-free cathode material is of a lamellar structure, hexagonal system, and has an R^{3̅}m spatial point group. The I(003)/I(104) ratio is 1.9. It can be known that the mixed arrangement degree of nickel and lithium in the cobalt-free cathode material is relatively low.
(3) EDS test is conducted on the obtained cobalt-free cathode material LiNi_{0.92}Mn_{0.07}W_{0.01}O₂, the test spectrogram refers to the Fig. 8, and it can be known from the Fig. 8 that the prepared cobalt-free cathode material has three metal elements: Ni, Mn and W.
(4) The obtained cobalt-free cathode material, the anode (lithium piece), the electrolyte (the electrolyte includes LiPF6/lithium Hexafluorophosphate) EC (ethylene carbonate)-DMC (dimethyl carbonate) assemble the lithium ion battery, and charge and discharge performance of the lithium ion battery is tested, and a charge and discharge performance test (the voltage range is 3.0-4.3V) result refers to the Fig. 9 (first time charge and discharge curve). It can be seen in combination with the Fig. 4 that at 0.1C discharge rate, the first time specific charge and discharge capacities of the lithium ion battery are 246.1 mAh/g and 213.8 mAh/g respectively, and the first time efficiency is 86.8%.
(5) the cycle performance of the lithium ion battery obtained in the (4) is tested at 25 °C (the test voltage is 3.0-4.3 V), the cycle curve at 0.5C/1C refers to the Fig. 10, and it can be seen from the Fig. 10 that the capacity retention ratio of the lithium ion battery after 50 cycles is 98.5%. Reasons that the cycle performance of the cathode-free cathode material is excellent are as follows: more elements Mn and W, which stabilizes the crystal structure of the cathode-free cathode material.

### Example 10

The cathode-free cathode material LiNi_{0.92}Mn_{0.07}W_{0.01}O₂ is prepared by adopting method and steps same with those in the example 1, and the difference lies in that the high-temperature reaction temperature is 800°C.

By adopting conditions same with those in the example 1, the lithium ion battery is prepared by taking the prepared cobalt-free cathode material is taken as the cathode, and the first time charge and discharge performance and the cycle performances of the lithium ion battery are tested (the test conditions are as same as those in the example 1), and at 0.1C discharge rate, the first time specific charge and discharge capacities of the lithium ion battery are 242.6 mAh/g and 208.7 mAh/g respectively, and the first time efficiency is 86.0%; and the capacity retention ratio of the lithium ion battery after 50 cycles at 0.5C/1C is 98.5%.

### Example 11

The cathode-free cathode material LiNi_{0.92}Mn_{0.07}W_{0.01}O₂ is prepared by adopting method and steps same with those in the example 1, and the difference lies in that the high-temperature reaction temperature is 850°C.

By adopting conditions same with those in the example 1, the lithium ion battery is prepared by taking the prepared cobalt-free cathode material is taken as the cathode, and the first time charge and discharge performance and the cycle performances of the lithium ion battery are tested (the test conditions are as same as those in the example 1), and at 0.1C discharge rate, the first time specific charge and discharge capacities of the lithium ion battery are 235.6 mAh/g and 201.7 mAh/g respectively, and the first time efficiency is 85.6%; and the capacity retention ratio of the lithium ion battery after 50 cycles at 0.5C/1C is 96.4%.

### Example 12

The cathode-free cathode material LiNi_{0.92}Mn_{0.07}W_{0.01}O₂ is prepared by adopting method and steps same with those in the example 1, and the difference lies in that the high-temperature reaction temperature is 900°C.

By adopting conditions same with those in the example 1, the lithium ion battery is prepared by taking the prepared cobalt-free cathode material is taken as the cathode, and the first time charge and discharge performance and the cycle performances of the lithium ion battery are tested (the test conditions are as same as those in the example 1), and at 0.1C discharge rate, the first time specific charge and discharge capacities of the lithium ion battery are 219.9 mAh/g and 186.4 mAh/g respectively, and the first time efficiency is 84.8%; and the capacity retention ratio of the lithium ion battery after 50 cycles at 0.5C/1C is 94.2%.

### Example 13

The cathode-free cathode material LiNi_{0.92}Mn_{0.07}W_{0.01}O₂ is prepared by adopting method and steps same with those in the example 1, and the difference lies in that the high-temperature reaction temperature is 1000 °C.

By adopting conditions same with those in the example 1, the lithium ion battery is prepared by taking the prepared cobalt-free cathode material is taken as the cathode, and the first time charge and discharge performance and the cycle performances of the lithium ion battery are tested (the test conditions are as same as those in the example 1), and at 0.1C discharge rate, the first time specific charge and discharge capacities of the lithium ion battery are 210.4 mAh/g and 175.5 mAh/g respectively, and the first time efficiency is 83.4%; and the capacity retention ratio of the lithium ion battery after 50 cycles at 0.5C/1C is 92.3%.

### Example 14

A method for preparing the cobalt-free cathode material LiNi_{0.50}Mn_{0.48}Al_{0.02}O₂ includes:
S1: a specific preparation method for the precursor Ni_{0.50}Mn_{0.48}W_{0.02}(OH)₂ includes: NiSO₄·6H₂O, MnSO₄·H₂O and (NH₄)₁₀W₁₂O₄·1-xH₂O are weighed at a stoichiometric ratio, wherein x is 10. A molar ratio of nickel to manganese to tungsten is 0.50: 0.48: 0.02. The salts are mixed to prepare a 2 mol/L metal salt solution, and prepare a 4 mol/L sodium hydroxide solution; the metal salt solution, the NaOH solution and ammonia water are added into a reaction kettle protected by an N₂ atmosphere, wherein a system temperature in the reaction kettle is 55 °C, the pH is controlled at about 11.0 and a stirring rotating speed is 600 r/min; a precursor Ni_{0.50}Mn_{0.48}W_{0.01}(OH)₂ precipitate is generated; and the precursor Ni_{0.50}Mn_{0.48}W_{0.01}(OH)₂ precipitate is dried to obtain Ni_{0.50}Mn_{0.48}W_{0.01}(OH)₂;
S2: mixing is conducted by adopting the method same with that in the example 1, and the difference lies in that the precursor is Ni_{0.50}Mn_{0.45}Al_{0.05}(OH)₂
S3: the cathode-free cathode material LiNi_{0.50}Mn_{0.48}W_{0.02}O₂ is prepared by adopting method and steps same with those in the example 1, and the difference lies in that the high-temperature reaction temperature is 980°C. The I(003)/I(004) peak value ratio is greater than or equal to 1.2.

By adopting conditions same with those in the example 1, the lithium ion battery is prepared by taking the prepared cobalt-free cathode material is taken as the cathode, and the first time charge and discharge performance and the cycle performances of the lithium ion battery are tested (the test conditions are as same as those in the example 1), and at 0.1C discharge rate, the first time specific charge and discharge capacities of the lithium ion battery are 203.6 mAh/g and 175.9 mAh/g respectively, and the first time efficiency is 86.4%; and the capacity retention ratio of the lithium ion battery after 50 cycles at 0.5C/1C is 99.4%.

### Example 15

The steps 1 and 2 are as same as those in the example 9; the step 3 adopts the method as same as that in the example 9, and the difference lies in that the high temperature is 750 °C; and the I(003)/I(004) peak value ratio is equal to 1.2.

By adopting conditions same with those in the example 1, the lithium ion battery is prepared by taking the prepared cobalt-free cathode material is taken as the cathode, and the first time charge and discharge performance and the cycle performances of the lithium ion battery are tested (the test conditions are as same as those in the example 1), and at 0.1C discharge rate, the first time specific charge and discharge capacities of the lithium ion battery are 243.6 mAh/g and 210.0 mAh/g respectively, and the first time efficiency is 86.2%; and the capacity retention ratio of the lithium ion battery after 50 cycles at 0.5C/1C is 97.8%.

### Example 16

The steps 1 and 2 are as same as those in the example 9; the step 3 adopts the method as same as that in the example 9, and the difference lies in that the high temperature is 720 °C; and the I(003)/I(004) peak value ratio is less than 1.2.

By adopting conditions same with those in the example 1, the lithium ion battery is prepared by taking the prepared cobalt-free cathode material is taken as the cathode, and the first time charge and discharge performance and the cycle performances of the lithium ion battery are tested (the test conditions are as same as those in the example 1), and at 0.1C discharge rate, the first time specific charge and discharge capacities of the lithium ion battery are 239.8 mAh/g and 205.3 mAh/g respectively, and the first time efficiency is 85.6%; and the capacity retention ratio of the lithium ion battery after 50 cycles at 0.5C/1C is 97.1%.

### Comparative example 1

A method for preparing the cobalt-free cathode material LiNi_{0.40}Mn_{0.50}Al_{0.10}O₂ includes:
S1: the specific preparation method of the precursor Ni_{0.40}Mn_{0.50}Al_{0.10}(OH)₂ includes: NiSO₄·6H₂O, MnSO₄·H₂O and Al₂(SO₄)₃·6H₂O (a molar ratio of nickel to manganese and aluminum is 0.40: 0.50: 0.10) are weighed at a stoichiometric ratio and the sulfates are mixed to prepare a 2 mol/L metal salt solution, and prepare a 4 mol/L sodium hydroxide solution; the metal salt solution, the NaOH solution and ammonia water are added into a reaction kettle protected by an N₂ atmosphere, wherein a system temperature in the reaction kettle is 55 °C, the pH is controlled at about 10.5 and a stirring rotating speed is 300 r/min; a precursor Ni_{0.40}Mn_{0.50}Al_{0.10}(OH)₂ precipitate is generated; and the precursor Ni_{0.40}Mn_{0.50}Al_{0.10}(OH)₂ precipitate is dried to obtain Ni_{0.40}Mn_{0.50}Al_{0.10}(OH)₂.
S2: a step of mixing the precursor Ni_{0.40}Mn_{0.50}Al_{0.10}(OH)₂ with LiOH: LiOH and Ni_{0.40}Mn_{0.50}Al_{0.10}(OH)₂ are weighed respectively at a stoichiometric ratio and are mixed uniformly in the high speed mixing apparatus to obtain a mixture, wherein a molar ratio of lithium to nickel to manganese and aluminum is 1.2: 0.40: 0.50: 0.1, wherein the rotating speed of the high speed mixing apparatus is 850 rpm, the mixing time is 10 minutes, and the material filling rate in the mixing apparatus is 55%; and
S3, a step of reaction of the cobalt-free cathode material LiNi_{0.40}Mn_{0.50}Al_{0.10}O₂: the pre-mixture is placed in an oxygen atmosphere (an oxygen containing concentration is 95%); a high-temperature reaction is conducted for 10 hours at 1050°C (a heating rate is 1-5°C/min)to synthesize the cobalt-free cathode material LiNi_{0.40}Mn_{0.50}Al_{0.10}O₂; then natural cooling is conducted and the cobalt-free cathode material is crushed and screened by a 400-mesh sieve to obtain the cobalt-free cathode material LiNi_{0.40}Mn_{0.50}Al_{0.10}O₂ with a proper particle size.

By adopting conditions same with those in the example 1, the lithium ion battery is prepared by taking the prepared cobalt-free cathode material is taken as the cathode, and the first time charge and discharge performance and the cycle performances of the lithium ion battery are tested (the test conditions are as same as those in the example 1), and at 0.1C discharge rate, the first time specific charge and discharge capacities of the lithium ion battery are 193.0 mAh/g and 162.7 mAh/g respectively, and the first time efficiency is 84.3%; and the capacity retention ratio of the lithium ion battery after 50 cycles at 0.5C/1C is 99.6%.

### Comparative example 2

A method for preparing a cobalt-containing cathode material LiNi_{0.92}Mn_{0.03}Co_{0.03}Al_{0.02}O₂ includes:
S1: the specific preparation method of the precursor Ni_{0.92}Mn_{0.03}Co_{0.03}Al_{0.02}(OH)₂ includes: NiSO₄·6H₂O, MnSO₄·H₂O, CoSO₄·7H₂O and Al₂(SO₄)₃·6H₂O (a molar ratio of nickel to manganese to cobalt to aluminum is 0.92: 0.03: 0.03: 0.02) are weighed at a stoichiometric ratio and the sulfates are mixed to prepare a 2 mol/L metal salt solution, and prepare a 4 mol/L sodium hydroxide solution; the metal salt solution, the NaOH solution and ammonia water are added into a reaction kettle protected by an N₂ atmosphere, wherein a system temperature in the reaction kettle is 55 °C, the pH is controlled at about 11.1 and a stirring rotating speed is 500 r/min; a precursor Ni_{0.92}Mn_{0.03}Co_{0.03}Al_{0.02}(OH)₂ precipitate is generated; and the precursor Ni_{0.92}Mn_{0.03}Co_{0.03}Al_{0.02}(OH)₂ precipitate is dried to obtain Ni_{0.92}Mn_{0.03}Co_{0.03}Al_{0.02}(OH)₂;
S2: a step of mixing the precursor Ni_{0.92}Mn_{0.03}Co_{0.03}Al_{0.02}(OH)₂ with LiOH: LiOH and Ni_{0.92}Mn_{0.03}Co_{0.03}Al_{0.02}(OH) ₂are weighed respectively at a stoichiometric ratio and are mixed uniformly in the high speed mixing apparatus to obtain a mixture, wherein a molar ratio of lithium to nickel to manganese and aluminum is 1: 0.92: 0.03: 0.03: 0.02, wherein the rotating speed of the high speed mixing apparatus is 850 rpm, the mixing time is 10 minutes, and the material filling rate in the mixing apparatus is 55%; and
S3, a step of reaction of the cobalt-free cathode material Ni_{0.92}Mn_{0.03}Co_{0.03}Al_{0.02}O₂: the pre-mixture is placed in an oxygen atmosphere (an oxygen containing concentration is 95%); a high-temperature reaction is conducted for 10 hours at 730°C (a heating rate is 1-5°C/min) to synthesize the cobalt-free cathode material LiNi_{0.92}Mn_{0.03}Co_{0.03}Al_{0.02}O₂; then natural cooling is conducted and the cobalt-free cathode material is crushed and screened by a 400-mesh sieve to obtain the cobalt-free cathode material LiNi_{0.92}Mn_{0.03}Co_{0.03}Al_{0.02}O₂ with a proper particle size.

By adopting conditions same with those in the example 1, the lithium ion battery is prepared by taking the prepared cobalt-free cathode material is taken as the cathode, and the first time charge and discharge performance and the cycle performances of the lithium ion battery are tested (the test conditions are as same as those in the example 1), and at 0.1C discharge rate, the first time specific charge and discharge capacities of the lithium ion battery are 235.8 mAh/g and 217.9 mAh/g respectively, and the first time efficiency is 92.4%; and the capacity retention ratio of the lithium ion battery after 50 cycles at 0.5C/1C is 97.2%.

It can be seen from test data analysis of the examples 1-8 and 9-16 that along with increase of reaction temperature, the specific discharge capacity, the first effect and the capacity retention ratio of the lithium ion battery are reduced gradually, which is primary because of larger and larger size (the particle size is larger and larger) of the cobalt-free cathode material along with increase of the reaction temperature, such that the performance of the lithium ion battery is reduced gradually. However, it can be known from test results of the examples that when the reaction temperature is within a range of 700-1000°C, the prepared cobalt-free cathode material has good electric performance, such that the lithium ion battery has excellent specific discharge capacity, first effect and capacity retention ratio.

In the description of the present specification, the description with reference to the terms "an embodiment", "some embodiments", "example", "specific example", or "some examples" and the like means that specific features, structures, materials, or features described in connection with the embodiments or examples are included in at least one embodiment or example of the present disclosure. In the description, schematic expressions of the terms do not have to mean same embodiments or exemplary embodiments. Furthermore, specific features, structures, materials or characteristics described can be combined in any one or more embodiments or exemplary embodiments in proper manners. In addition, under a condition without mutual contradiction, those skilled in the art can integrate or combine different embodiments or exemplary embodiments with different embodiments or exemplary embodiments described in the description.

Although the embodiments of the present have been shown and described above, it can be understood that the embodiments are exemplary and cannot be construed as limitation to the present disclosure. Those skilled in the art can make changes, modification, replacement and transformation on the embodiments within the scope of the present disclosure.

## Claims

1. A cobalt-free cathode material, wherein that a general formula of the cobalt-free cathode material is LiₓNiₐMn_{b}R_{c}O₂, 1≤x≤1.15, 0.5≤a≤0.95, 0.02≤b≤0.48, 0<c≤0.05, and R is aluminum or tungsten.

2. The cobalt-free cathode material according to claim 1, wherein,
when R is tungsten, 0.03≤b≤0.48, 0<c≤0.02; and
when R is aluminum, 0.02≤b≤0.45, 1≤x≤1.10.

3. The cobalt-free cathode material according to claim 1 or 2, wherein the cobalt-free cathode material meets at least one of following conditions:
a crystal is of a lamellar structure;
a hexagonal system;
an R ^{3̅}m spatial point group;
a morphology is monocrystal or polycrystal; and
a grain size is 1-15 microns.

4. The cobalt-free cathode material according to claim 1 or 2, wherein in an RXD spectrum of the cobalt-free cathode material, a peak ratio of 1(003) to 1(104) is greater than or equal to 1.2.

5. The cobalt-free cathode material according to claim 1 or 2, wherein the cobalt-free cathode material meets at least one of following conditions:
a specific surface area is 0.15-1.5 m²/g;
a pH value is less than or equal to 12;
a content of residual alkali is 0.05-0.7wt%;
a tap density is greater than or equal to 1.3 g/cm³;
an apparent density is greater than or equal to 0.9 g/cm³;
a water content is less than or equal to 1000 ppm; and
a content of a magnetic substance impurity is less than or equal to 300 ppb.

6. A method for preparing the cobalt-free cathode material according to any one of claims 1-5, comprising:
mixing lithium hydroxide with a precursor NiₐMn_{b}R_{c}(OH)₂ uniformly to obtain a pre-mixture, wherein, 0.5≤a≤0.95, 0.02≤b≤0.48, 0<c≤0.05, and R is aluminum or tungsten; and
conducting a reaction on the pre-mixture at a predetermined temperature in an oxygen-containing atmosphere to obtain the cobalt-free cathode material.

7. The method according to claim 6, wherein the predetermined temperature ranges from 700°C to 1000°C and a time for the reaction ranges from 10 hours to 20 hours.

8. The method according to claim 6 or 7, wherein the predetermined temperature is achieved by gradual heating, wherein a heating rate ranges from 1 °C/min to 5 °C /min.

9. The method according to claim 6 or 7, wherein in the oxygen-containing atmosphere, a concentration of oxygen is greater than or equal to 90%.

10. A lithium ion battery, comprising the cobalt-free cathode material according to any one of claims 1-5.
